Europäisches Patentamt

European Patent Office

Office européen des brevets

(19)

(11) Publication number: **0 055 013**
A1

(12) **EUROPEAN PATENT APPLICATION**

(21) Application number: **81304554.9**

(22) Date of filing: **01.10.81**

(51) Int. Cl.³: **F 23 K 3/16**

(30) Priority: **02.10.80 GB 8031804**

(43) Date of publication of application: **30.06.82**
Bulletin 82/26

(84) Designated Contracting States: **AT BE CH DE FR IT LI LU NL SE**

(71) Applicant: **H. SAACKE LIMITED, Fitzherbert Road, Farlington Portsmouth, PO6 1RX (GB)**

(72) Inventor: **Tarrant, Norman John, 6, High Walk, Farnham Hampshire (GB)**
Inventor: **Wells, Jack Donald, Shore Lodge 75, Shore Road, Warsash Southampton Hampshire (GB)**
Inventor: **French, Colin, 41, Cavendish Drive Inhurst Wood, Waterlooville Hampshire (GB)**
Inventor: **Jay, Barrie, 10, Southdown View, Waterlooville Hampshire (GB)**

(74) Representative: **Messulam, Alec Moses et al, MARKS & CLERK 57/60 Lincoln's Inn Fields, London WC2A 3LS (GB)**

(54) Apparatus and method for distributing fuel or material to a furnace.

(57) The invention relates to apparatus for introducing fuel or material for insinuation into a furnace which comprises a feed tube (16) for projecting materials towards a deflector (18) positioned within the furnace, the deflector (18) being movable to allow the distribution of the material falling on the bed (12) to be varied. In this way, the feed tube (16) can be arranged at one end of the furnace to prevent it from interfering with the convection tubes when the furnace forms part of a boiler.

## Improvements relating to furnaces

The present invention relates to furnaces in which coal or other solid fuel is introduced into the furnace for combustion, and is particularly related to apparatus for and a method of feeding solid fuel into a furnace.

In such a furnace, the coal or other solid fuel is deposited on a grate, and air is introduced into the furnace through the grate from beneath. Assu--ming that the air distribution along the grate is regular, it becomes desirable to provide an even layer of coal so that the combustion in the furnace is as efficient as possible.

In one prior art proposal, coal is dropped from a vertical feed tube onto a stationary deflector placed immediately beneath the open end of the tube. The coal is deflected downwards and sideways by the stationary deflector. The coal is distributed evenly over the grate since pieces of coal striking different parts of the deflector will be distributed to different parts of the grate.

The above proposal suffers from the disadvantage that the feed tube is above the grate and a large part of the feed system is close to the heat. Another disadvantage is that in many standard types of boiler in which the combustion gases pass over banks of convection tubes to heat water carried in the tubes, the feed tube must pass through one or more of the banks of convection tubes, which results in a decrease in the heating efficiency of the boiler.

With a view to mitigating the above disadvantages encountered in the prior art, the present invention provides apparatus for introducing fuel or material for incineration into a furnace, comprising a feed tube for projecting fuel or material into the furnace, deflecting means in the path of the project fuel for directing the fuel towards the bed and means for altering the position of the deflector to enable the distribution of the fuel or material falling on the bed to be varied.

In the foregoing paragraph, it is to be understood that the term deflector includes any means for changing the path of travel of the fuel. It is also to be understood that the term "altering the position" of the deflector includes both translation and rotation of the deflector about one or more axes.

By virtue of such a construction, the feed tube and deflector can be arranged at one end of the grate rather than above it so that the feed tube need not interfere with the convectin tubes.

According to a second aspect of the present invention, there is provided a method of feeding fuel or material for incineration into a furnace comprising the steps of feeding the fuel or the material _via_ a feed tube towards a deflector situated within the furnace and altering the position of the deflector whereby to permit a desired

0055013

distribution of the fuel or the material over the fuel
bed or grate of the furnace.

Preferably, the deflector oscillates continuously
while fuel or material is being projected into the furance.

The invention will now be described further, by
way of example, with reference to the accompanying
drawings, in which:

Figure 1 is a vertical elevational section through
a furnace utilising apparatus embodying the invention;

Fig. 2 is a side elevation showing an alternative type of deflector ;

Fig. 3a is a front elevation of the deflector of the 1;

Fig. 3b is a side elevation of the deflector shown in Fig 1;

and Fig. 3c is a view along the line C of Fig. 3a.

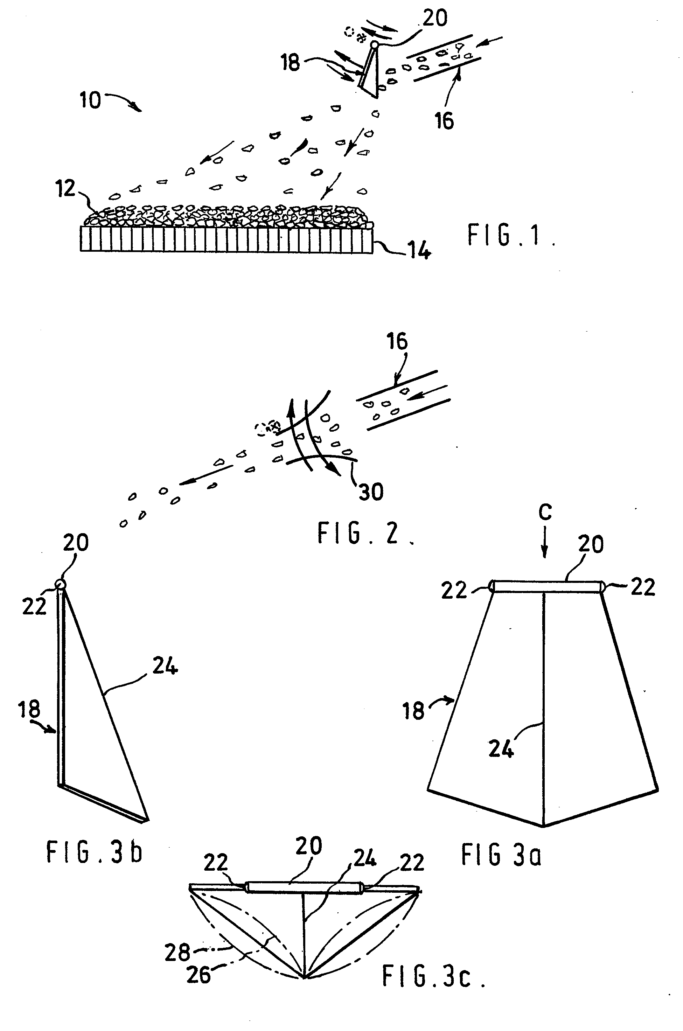

In Fig. 1, fuel fed into the furnace, generally designated 10, forms a bed 12 on the grate 14 of the furnace. Air is introduced into the fuel bed 12 from beneath the grate 14 and the air is distributed evenly along the grate.

Fuel is introduced into the furnace by means of a feed tube 16 which projects the fuel into the furnace. The feed tube 16 is situated in a side wall of the furnace 10 and consequently avoids the prior art disadvantage of being directly above the heated zone and of interfering with the heating efficiency of the associated boiler by passing through the banks of convection tubes. The solid fuel particles are projected into the furnace either by a mechanical thrower (not shown) or by being carried in on an air or gas stream.

Upon entering the furnace 10, the fuel is projected against solid fuel distributor, which in Fig. 1 is shown as a plate 18, The plate 18 is movable about one or more axes and hence the position of the distributor plate may be varied to alter the distribution of the fuel to give an even bed. The plate 18 is fixed to, but free to rotate around a horizontal axis 20 and is channelled between bearings 22. However, the horizontal axis 20 may itself be rotatable about a vertical axis or about the horizontal axis orthogonal to itself. Thus, rotation about 3 axes is envisaged to allow accurate control of the distribution of the fuel to give an even bed 12. It is also envisaged that one or more of the axes may be translatable to give greater mobility to the deflector. The distributor is driven by a linking system which may be characterized to suit the particular application ie. to produce a uniform fuel bed or one which is convex or concave in shape. However, it is envisaged that a number of suitable systems could be devised for controlling the movement of the distributor.

The shape of the distributor plate 18 is shown in more detail in Figs. 3a, 3b and 3c. As seen in Fig. 3a, the width of the plate 18 increases towards the bottom. The reason for this is that the fuel jet spreads out as it drops and therefore the shape of the distributor must spread out to ensure that all the fuel is deflected. The plate 18 is also provided with a central rib 24, best seen in Fig. 3b and 3c. This acts to spread the fuel sideways, ie. into and out from the plane of the drawing of Fig. 1. This ensures that not only is the fuel distributed evenly lengthwise but also in the breadthwise dimension of the furnace. Although in Figure 3a the edge of the plate is shown to be straight on either side of the rib 24, it is possible that the plate is concave, as shown at 26, or convex as at 28, on either side of the rib.

The plate 18 is made of a sheet of metal which means that the plate may be fabricated easily and also makes it less expensive to use an exotic metal than if the plate were a single solid shape piece. However, this feature of the plate 18 may be varied, as indeed may the shape of the plates generally. The shape of the plate 18 may be varied to suit a particular application.

Figure 2 illustrates an alternative type of distributor. In this case, the distributor is in the form of a nozzle 30, the nozzle may be moved in all three planes and is not necessarily circular in cross section.

While the above invention has been described with respect to a furnace burning solid fuel such as coal or coke, it is possible that the invention may be used in other types of furnaces. For example, the invention could be used to distribute any combustable or non-combustable material for incineration on a grate, and could also be applied to a furnace using a fluidised bed combustion process. In particular, in applications here the fluidised bed is shallow, it is possible to get an uneven bed and the present invention may be utilised to rectify this disadvantage.

The deflecting plate or nozzle may be caused to oscillate continuously by means of a motor serving to drive a cranking mechanism connected to the deflector means. If desired, the deflector plate can be arranged to dwell in certain positions for a greater or lesser time either by varying the speed of rotation of the motor or by varying the transmission ratio of a reduction train connected between the motor and the deflector means.

In an alternative to continuous oscillation of the deflector means, it may be preferred to monitor the combustion on the bed constantly in order to determine the part of the bed to which fuel or combustion material should be directed and to vary the position of the deflector in dependence upon the prevailing state of the combustion process.

EPC CLAIMS:

1.   Apparatus for introducing fuel or material for incineration into a furnace characterised by a feed tube 16 for projecting fuel or material into the furnace, a deflector 18 arranged in the part of the projected fuel or material for directing the fuel or material towards the bed and means for altering the position of the deflector to enable the distribution of the fuel or material falling on the bed (12) to be varied.

2.   (According to Claim 1, characterised in that the deflector comprises a plate 18 arranged in the part of the projected fuel or material).

3.   Apparatus according to Claim 2, characterised in that the plate 18 is pivotable about an axis 20 extending transversely of the part of the projected fuel and shaped in order to provide a desired distribution of the fuel material over the bed 12 in a direction transverse to the projection path.

4.   Apparatus according to Claim 1, wherein the deflecting means comprises a nozzle (30) rotatable to direct the fuel or material towards different parts of the bed 12.

5.   Apparatus according to any preceding Claim, wherein a motor is provided for continuously oscillating the deflector during projection of fuel or material into the furnace.

6.     A method of feeding fuel or material for incineration to a furnace which is characterised by the steps of feeding the fuel or the material via a feed tube arranged at one end of the furnace towards a deflector situated within the furnace and altering the position of the deflector so as to permit a desired distribution of the fuel or the material over the fuel bed or grate of the furnace.

0055013

FIG.1.

FIG.2.

FIG.3b

FIG 3a

FIG.3c.

## DOCUMENTS CONSIDERED TO BE RELEVANT

| Category | Citation of document with indication, where appropriate, of relevant passages | Relevant to claim |
|---|---|---|
| X | AT – B – 140 332 (PFEIFFER)<br>* Page 2, lines 13-28; fig. 1,3 * | 1-3,5,6 |
| X | US – A – 3 693 812 (MAHR)<br>* Column 3, lines 8-24; column 6, lines 5-17; fig. 1,4 * | 1-3,5,6 |
| X | US – A – 1 888 697 (RATHGEB)<br>* Totality * | 1,4-6 |
| | DE – C – 647 417 (DEMARTEAU-FASTRE)<br>* Page 2, lines 60-77; fig. 1,3,4 * | 1-3 |

**CLASSIFICATION OF THE APPLICATION (Int. Cl.³)**

F 23 K 3/16

**TECHNICAL FIELDS SEARCHED (Int. Cl.³)**

F 23 K 3/00

F 23 K 5/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | |
|---|---|
| X | The present search report has been drawn up for all claims |

| Place of search | Date of completion of the search | Examiner |
|---|---|---|
| VIENNA | 08-01-1982 | TSCHÖLLITSCH |

EPO Form 1503.1  06.78